# EUROPEAN PATENT APPLICATION

(11) **EP 4 678 260 A1**
(43) Date of publication of application: **14.01.2026**
(21) Application number: 23926386.6
(22) Date of filing: 15.09.2023
(51) Int. Cl.: B01D 19/00, B01D 61/00, B01D 61/12, B01D 61/44, B01D 61/54, C02F 1/00, C02F 1/20, C02F 1/32, C02F 1/42, C02F 1/44, C02F 1/469

(54) **CONTROL METHOD FOR PURE WATER PRODUCTION SYSTEM**

(30) Priority: 08.03.2023 JP 2023035557
(71) Applicant: Kurita Water Industries Ltd., Tokyo 164-0001 (JP)
(72) Inventor: MINATO, Yasuharu, Tokyo 164-0001 (JP)
(74) Representative: TBK
(86) International application number: PCT/JP2023/033725
(87) International publication number: WO 2024/185177

(57) **Abstract**

When the amount of water usage at each use point decreases and the amount of water supply to sub systems 4A, 4B, 4C becomes lower than a reference value, if the amount of water supply is reduced by throttling each of control valves 60A, 60B, 60C, the water supply pressure at a pressure meter 59 increases. Therefore, a control means reduces, on the basis of the measurement value from the pressure meter 59, the output of a high pressure pump 52B through inverter control such that the measurement value at the pressure meter 59 becomes substantially constant with respect to a predetermined value. In addition, when the amount of water usage at each use point increases and the amount of water supply to the sub systems 4A, 4B, 4C becomes higher than the reference value, the amount of water supply is increased by opening each of the control valves 60A, 60B, 60C. This reduces the water supply pressure at the pressure meter 59. Therefore, the control means increases, on the basis of the measurement value at the pressure meter 59, the output by the high pressure pump 52B through inverter control such that the measurement value at the pressure meter 59 becomes substantially constant with respect to a predetermined value. Such a control method for a pure water production system allows for control of the amount of water supply according to the amount of water usage.

## Description

### Technical Field

The present invention relates to a control method for pure water production system for producing ultrapure water used in electronics industry fields such as semiconductor and liquid crystal, and particularly relates to a control method for pure water production system capable of controlling an amount of water supply according to an amount of water usage.

### Background Technology

Conventionally, ultrapure water used in electronics industry fields such as semiconductor is produced by processing raw water in an ultrapure water production system composed of a pretreatment system, a primary pure water device, and a sub system that processes primary pure water.

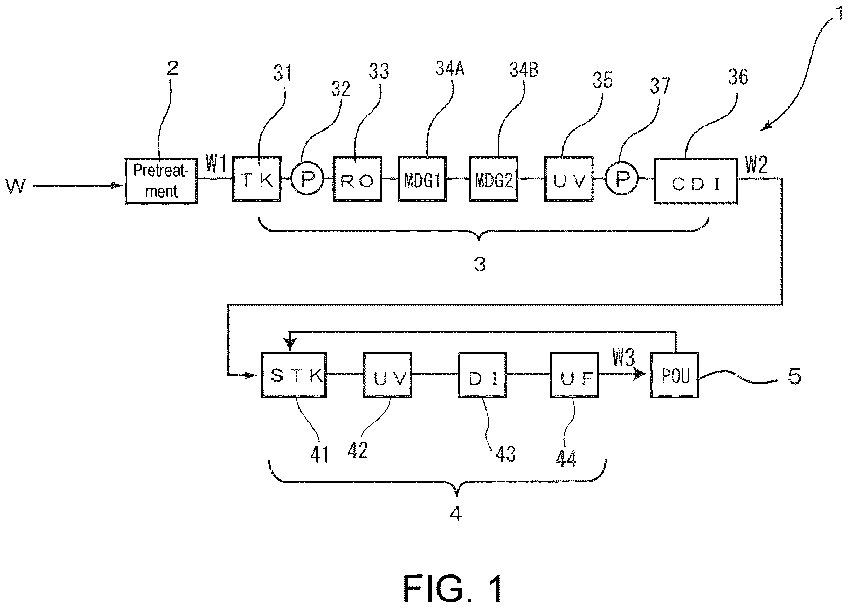

For example, as shown in FIG. 1, an ultrapure water production system 1 is configured with three stages of equipment: a pretreatment device 2, a primary pure water device (pure water production system) 3, and a secondary pure water production device (sub system) 4 as a pure water using device. In the pretreatment device 2 of such an ultrapure water production system 1, pretreatment is applied to raw water W by filtration, coagulation sedimentation, precision filtration membrane, etc., and suspended substances are mainly removed.

The primary pure water device 3 includes a water-to-be-treated tank 31 for storing pretreated water (water to be treated) W1, a high pressure pump 32 for sending this pretreated water W1, a reverse osmosis membrane device 33, a first degassing membrane device 34A for removing dissolved gas by air, a second degassing membrane device 34B for further degassing dissolved gas by nitrogen gas, an ultraviolet oxidation device 35, an electrodeionization device 36, and a water supply pump 37 for supplying water to this electrodeionization device 36. This primary pure water device 3 removes most of the electrolytes, fine particles, viable bacteria, etc. in the pretreated water W1 and decomposes organic matter.

The sub system 4 is configured by a sub-tank 41 as a pure water tank arranged at the downstream stage of the above-mentioned electrodeionization device for storing primary pure water W2 produced by the primary pure water device 3, an ultraviolet oxidation device 42, a non-regenerative mixed bed ion exchange device 43, and an ultrafiltration (UF) membrane 44 as a membrane filtration device for processing the primary pure water W2 supplied from this sub-tank 41 via a pump (not shown), and in some cases, an RO membrane separation device may also be provided as needed. In this sub system 4, trace amounts of organic matter (TOC components) contained in the primary pure water W2 are oxidatively decomposed by the ultraviolet oxidation device 42, and then through processing with the non-regenerative mixed bed ion exchange device 43, residual carbonate ions, organic acids, anionic substances, as well as metal ions and cationic substances are removed by ion exchange. Then, fine particles are removed by the ultrafiltration (UF) membrane 44 to obtain ultrapure water W3, which is supplied to a use point 5, and unused ultrapure water is returned to the sub-tank 41.

In order to stably supply primary pure water of predetermined water quality, this ultrapure water production system 1 performs control such as producing an excess amount of primary pure water W2 in advance, supplying only the required amount to the sub-tank 41, and recycling the surplus portion.

However, in the conventional control method for the ultrapure water production system 1 as described above, it is necessary to supply and process more than the required amount of water to the electrodeionization device 36, etc. For this reason, there is room for improvement in terms of energy efficiency. Thus, it is conceivable to vary the processing amount of the electrodeionization device 36 by changing the processing amount of the primary pure water device 3 according to the usage amount at the use point 5, but not only is it difficult to follow the fluctuations in usage amount at the use point 5, it also causes a decrease in the water quality of the desalinated water in the electrodeionization.

Therefore, as a control method for ultrapure water production system capable of producing primary pure water according to the usage amount at the use point, the applicant has obtained a patent (Patent Document 1) for a control method of an ultrapure water production system including a primary pure water system that has a reverse osmosis membrane, an electrodeionization device, and a water supply pump provided at the upstream stage of the electrodeionization device, a water storage tank (sub-tank) that is equipped with a water level measuring means disposed at the downstream stage of the electrodeionization device, and a sub system that further processes the primary pure water produced by the primary pure water system, wherein the pump for supplying the electrodeionization device is controlled by inverter control so as to maintain the water level of the water storage tank measured by the water level measuring means substantially constant.

### Related Art Documents

### Patent Documents

Patent Document 1: Japanese Patent No. 6863510

### SUMMARY OF INVENTION

### Problem to be Solved by the Invention

However, in the control method of the ultrapure water production system described in Patent Document 1, the water level of the tank such as the water storage tank (sub-tank) is controlled to be kept substantially constant based on the water level of the tank, so there is a problem that this control method cannot be applied to cases where there is no tank such as a sub-tank in the water supply system. Especially in a large-scale ultrapure water production system including multiple sub systems, it would be desirable in terms of efficient operation of the ultrapure water production system if there is a control method for pure water production system that can more reliably supply water to the sub systems with simple control.

The present invention has been made in view of the above problem, and aims to provide a control method for pure water production system capable of controlling the amount of water supply according to the amount of water usage.

### Means for Solving the Problem

In view of the above purpose, the present invention provides a control method for pure water production system that supplies pure water, which is produced by a pure water production system including a water-to-be-treated supply source, a water supply mechanism connected to the water-to-be-treated supply source, a pressure meter for water supply provided at a downstream stage of the water supply mechanism, and one or two or more types of water treatment devices provided between the water supply mechanism and the pressure meter, to a pure water using device at a downstream stage of the pressure meter. The control method for pure water production system includes: providing a flow adjustment mechanism for pure water supplied to the pure water using device between the pressure meter and the pure water using device, adjusting a supply amount of pure water by the flow adjustment mechanism according to an amount of water usage of the pure water using device, and controlling water supply output of the water supply mechanism so that a measurement value of the pressure meter becomes substantially constant (Invention 1).

According to this invention (Invention 1), the flow adjustment mechanism is controlled to increase or decrease the supply amount of pure water to the pure water using device in response to the increase or decrease in the usage amount of pure water. If no control is applied, the water supply pressure decreases or increases with this increase or decrease in supply amount, so by controlling the water supply output of the water supply mechanism to make the water supply pressure substantially constant with respect to a predetermined value, it is possible to make the control of pure water supply and the control of output of the water supply mechanism independent of each other. These can realize simple and highly versatile control even in cases where there is no tank in the pure water supply system.

In the above invention (Invention 1), it is preferable that the pure water using device is provided in multiple series in parallel at the downstream stage of the pressure meter (Invention 2).

According to this invention (Invention 2), in the control of the flow adjustment mechanism that supplies pure water to multiple series, the water supply pressure decreases or increases in response to the increase or decrease in the total of the pure water supply amounts, so by controlling the water supply output of the water supply mechanism to make the water supply pressure substantially constant with respect to a predetermined value, it is possible to make the control of pure water supply and the control of output of the water supply mechanism independent of each other. These can realize simple and highly versatile control even in cases where pure water is supplied to multiple series at different supply amounts.

In the above inventions (Inventions 1 and 2), it is preferable that the water treatment devices are one type or two or more types selected from a reverse osmosis membrane, an ultraviolet oxidation device, a degassing membrane, an electrodeionization device, a regenerative ion exchange device, and a non-regenerative ion exchange device (Invention 3).

According to this invention (Invention 3), it is applicable to various general-purpose primary pure water devices.

### Effects of Invention

According to the present invention, the supply amount of pure water is adjusted by the flow adjustment mechanism in response to the amount of water usage of the pure water using device, and even if the supply amount (usage amount) of pure water increases or decreases, the water supply output of the water supply mechanism is controlled so that the measurement value of the pressure meter is substantially constant with respect to a predetermined value. Therefore, it is possible to make the control of pure water supply and the control of output of the water supply mechanism independent of each other. These can realize simple and highly versatile control even in cases where there is no tank in the pure water supply system.

### BRIEF DESCRIPTION OF THE DRAWINGS

[FIG. 1] is a flow diagram showing an ultrapure water production system including a pure water production system.
[FIG. 2] is a flow diagram showing a pure water production system (primary pure water device) to which a control method for pure water production system according to an embodiment of the present invention can be applied.
[FIG. 3] is a schematic diagram showing the control method for pure water production system of the above embodiment.
[FIG. 4] is a graph showing the amount of water usage at the use point, the amount of treated water of the electrodeionization device, and the water level of the water storage tank in the pure water production system (primary pure water device) of Example 1 and Comparative Example 1.

### DESCRIPTION OF THE EMBODIMENTS

A control method for pure water production system of the present invention will be described below with reference to the attached figures.

### (Pure Water Production System)

This embodiment has characteristics in the control of a pure water production system (primary pure water device) that constitutes an ultrapure water production system.

As the pure water production system (primary pure water device), there is no particular limitation, and various pure water production systems can be applied as long as they include a water supply pump for supplying water to be treated, a pressure meter for water supply provided at the downstream stage of the water supply pump, and a pure water using device that uses the produced pure water and is provided at the downstream stage of the pressure meter, and include one or two or more types of water treatment devices between the water supply pump and the pressure meter. And, in an ultrapure water production system as shown in FIG. 1, it can be suitably applied to systems without a sub-tank 41.

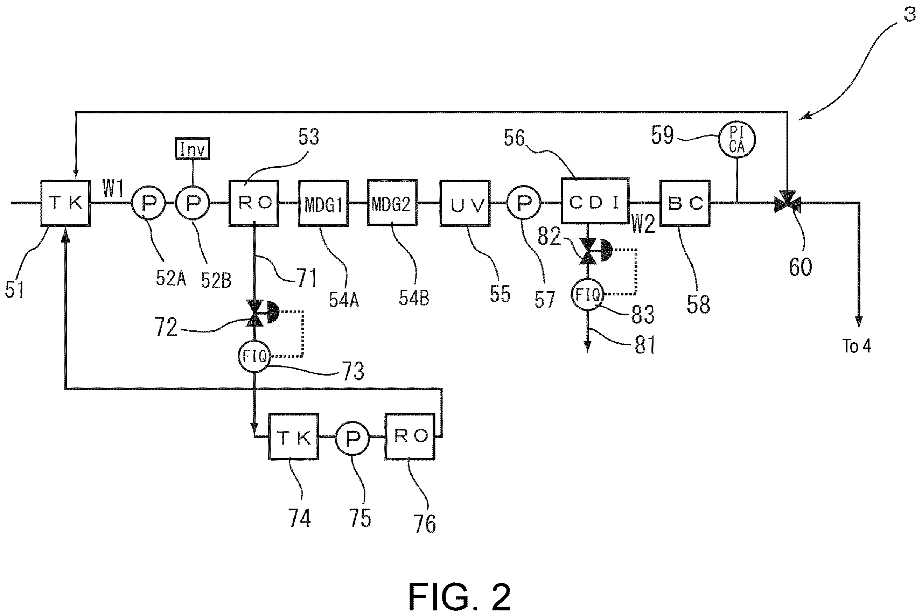

In FIG. 2, a primary pure water device (pure water production system) 3 includes a water-to-be-treated tank 51 as a water-to-be-treated supply source for storing pretreated water W1, a water supply pump 52A for this pretreated water W1, a high pressure pump 52B capable of inverter control for controlling the water supply output of this water supply pump 52A, a reverse osmosis membrane device 53, a first degassing membrane device 54A using air, a second degassing membrane device 54B using nitrogen gas, an ultraviolet oxidation device 55, an electrodeionization device (CDI) 56, and a water supply pump 57 for supplying water to this electrodeionization device 56, and is capable of supplying primary pure water W2 to a sub system 4 after the treated water from the electrodeionization device 56 is sent to a boron chelate resin tower 58 for processing. In this embodiment, the sub system 4 as a pure water using device does not have a sub-tank 41 in the configuration shown in FIG. 1, and the sub system 4 is configured to consume pure water W2 according to the usage amount at a use point 5.

In this primary pure water device 3, a pressure meter 59 for water supply and a control valve 60 as a flow adjustment mechanism are provided at the downstream stage of the boron chelate resin tower 58, and this pressure meter 59 is capable of transmitting information to a control mechanism (not shown), and this control mechanism is capable of inverter control of the high pressure pump 52B so that the measurement value obtained by the pressure meter 59 is substantially constant (for example, ±5%) with respect to a predetermined value, and is capable of controlling the opening degree of the control valve 60 based on the usage amount of primary pure water W2 in the sub system 4. The control of the supply amount of primary pure water W2 may be performed, for example, by measuring the supply amount of ultrapure water W3 from the sub system 4 to the use point 5 using a flow meter or the like, determining the usage amount of primary pure water W2 according to this supply amount, and controlling the opening degree of the control valve 60, or by measuring the supply amount of ultrapure water W3 from the sub system 4 to the use point 5 and the return amount from the use point 5 to the sub system 4 respectively using flow meters, determining the usage amount of primary pure water W2 according to the difference therebetween, and controlling the opening degree of the control valve 60.

Reference numeral 71 is a recovery line for concentrated water of the reverse osmosis membrane device 53, and this recovery line 71 is provided with a flow control valve 72, a flow meter 73, a concentrated water tank 74, a water supply pump 75, and a recovery reverse osmosis membrane 76, respectively, and the treated water of the recovery reverse osmosis membrane 76 is configured to return to the water-to-be-treated tank 51. In addition, reference numeral 81 is a recovery line for concentrated water of the electrodeionization device 56, and this concentrated water recovery line 81 is provided with a flow control valve 82 and a flow meter 83, respectively, and the concentrated water of this electrodeionization device 56 is sent to a dilute system recovery reverse osmosis membrane (not shown) for processing.

### (Control Method for Pure Water Production System)

A control method for the pure water production system shown in FIG. 2 will be described next.

In FIG. 2, the water supply pump 52A and the high pressure pump 52B including an inverter are started to supply pretreated water (water to be treated) W1 from the water-to-be-treated tank 1, which is processed by the reverse osmosis membrane device 53, the first degassing membrane device 54A, the second degassing membrane device 54B, the ultraviolet oxidation device 55, and the electrodeionization device (CDI) 56, and then sent to the boron chelate resin tower 58 for processing. Thereafter, the treated water is sent to the sub system 4, where ultrapure water is prepared in the sub system 4 according to the usage amount at the use point, and the required amount is supplied to the use point.

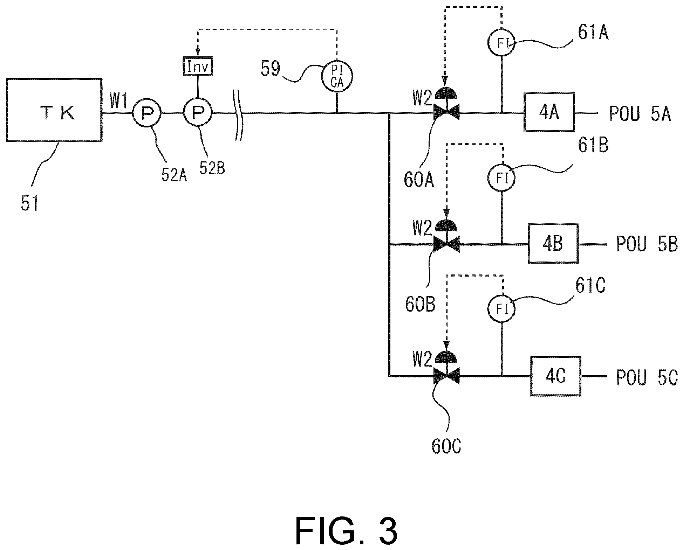

In the water production process performed by the primary pure water device 3 as described above, the pressure meter 59 for water supply, the control valve 60, and the high pressure pump 52B capable of inverter control form a control system as shown in FIG. 3. That is, in FIG. 3, the control system branches into three series at the downstream stage of the boron chelate resin tower 58, respectively supplying primary pure water W2 to sub systems 4A, 4B, and 4C, and control valves 60A, 60B, and 60C are respectively provided on the water supply pipes. This is a case where there are three control valves. For convenience, other component devices are omitted in FIG. 3.

In this primary pure water device 3, first, reference values (which may be values within a predetermined range) for the amounts of water supply to the sub systems 4A, 4B, and 4C are determined in advance. Then, the amounts of water supply to the sub systems 4A, 4B, and 4C according to the amount of water usage at each of the use points (POU) 5A, 5B, and 5C of the sub systems 4A, 4B, and 4C are measured by the flow meters 61A, 61B, and 61C. If this measurement value decreases from the reference value, a control means (not shown) throttles the control valves 60A, 60B, and 60C respectively to reduce the amounts of water supply to the sub systems 4A, 4B, and 4C. As a result, the total of the amounts of water supply of the three series decreases, so the water supply pressure of the pressure meter 59 increases. Therefore, the control means, based on the measurement value of this pressure meter 59, reduces the output of the high pressure pump 52B by inverter control so that the measurement value of the pressure meter 59 becomes substantially constant with respect to a predetermined value. On the other hand, the amounts of water supply to the sub systems 4A, 4B, and 4C according to the amount of water usage at each of the use points (POU) 5A, 5B, and 5C of the sub systems 4A, 4B, and 4C are measured by the flow meters 61A, 61B, and 61C. If this measurement value increases from the reference value, the control means (not shown) opens the control valves 60A, 60B, and 60C respectively to increase the amounts of water supply to the sub systems 4A, 4B, and 4C. Accordingly, the amount of water supply based on the total of the three series increases, so the water supply pressure of the pressure meter 59 decreases. Therefore, the control means, based on the measurement value of this pressure meter 59, increases the output by the high pressure pump 52B by inverter control so that the measurement value of the pressure meter 59 becomes substantially constant with respect to a predetermined value.

The above describes cases where the amounts of water supply to the sub systems 4A, 4B, and 4C increase or decrease from a predetermined reference value. However, even in the case of a combination of series that increase and series that decrease, if the total of the amounts of water supply of the three series increases or decreases, similar control may be performed by increasing or decreasing the total of the amounts of water supply through control of the control valves 60A, 60B, and 60C.

For example, in the control system shown in FIG. 3, in a case where the three series are configured with the same devices and the pressure meter 59 is controlled to be 0.1 MPa, Table 1 below shows an example of frequency control of the inverter of the high pressure pump 52B for four processes when the amounts of water supply to the three series (amount of water usage at the use points) are varied so that the opening degree of the control valve 60A changes from 20% → 40% → 60% → 20%, the opening degree of the control valve 60B changes from 20% → 20% → 40% → 40%, and the opening degree of the control valve 60C changes from 20% → 40% → 60% → 20%.

**[Table 1]**

| Process | 1 | → | 2 | → | 3 | → | 4 |
|---|---|---|---|---|---|---|---|
| Frequency of inverter of high pressure pump 52B (Hz) | 25 | | 30 | | 40 | | 30 |
| Outlet flow rate of high pressure pump 52B (m³/h) | 10 | | 15 | | 25 | | 15 |
| Indicator of pressure meter 59 (MP) | 0.1 | Falling tendency | 0.1 | Falling tendency | 0.1 | Rising tendency | 0.1 |
| Opening degree of control valve 60A (%) | 20 | Increasing tendency | 40 | Increasing tendency | 60 | Decreasing tendency | 20 |
| Opening degree of control valve 60B (%) | 20 | Maintain | 20 | Increasing tendency | 40 | Maintain | 40 |
| Opening degree of control valve 60C (%) | 20 | Increasing tendency | 40 | Increasing tendency | 60 | Decreasing tendency | 20 |

Although the present invention has been described above based on the above embodiments, the present invention is not limited to the above embodiments, and various modifications can be implemented. For example, as the pure water production system 3 to which the present invention can be applied, there is no particular limitation as long as the pure water production system 3, which includes the water-to-be-treated tank 51, the water supply pump 52A and the high pressure pump 52B as a water supply mechanism connected to this water-to-be-treated tank 51, the pressure meter 59 provided at the downstream stage of the water supply pump 52A and the high pressure pump 52B capable of inverter control, and one or two or more types of water treatment devices provided between the water supply pump 52A and the high pressure pump 52B and the pressure meter 59, controls the output of the high pressure pump 52B based on the amount of water supply (amount of pure water usage) to the pressure meter 59 and the pure water using device such as sub system 4 so that the measurement value of the pressure meter 59 becomes substantially constant. For example, there is no particular limitation on the one or two or more types of water treatment devices provided between the water supply pump 52A and the high pressure pump 52B and the pressure meter 59, which can be configured by one or two types selected from a reverse osmosis membrane, an ultraviolet oxidation device, a degassing membrane, an electrodeionization device, a regenerative ion exchange device, and a non-regenerative ion exchange device. In addition, the water supply mechanism may include only the high pressure pump 52B capable of inverter control. Furthermore, in the case of continuously supplying primary pure water (pure water) W2 to the sub-tank 41 according to the usage amount at the use point 5, the sub-tank 41 may be included.

### Example

The present invention will be described more specifically based on examples below, but the present invention is not limited to the following examples.

### [Example 1 and Comparative Example 1]

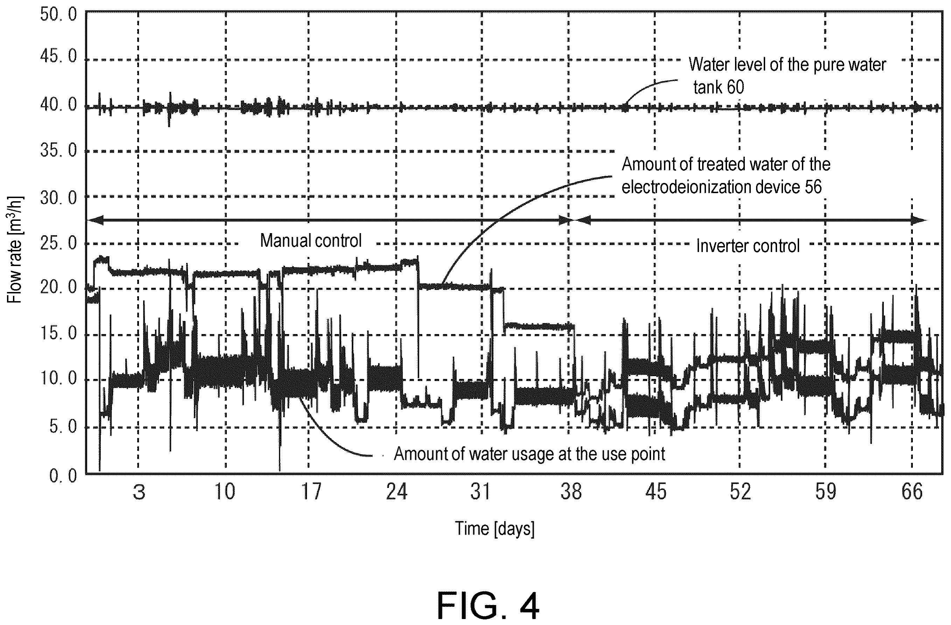

As a testing device, a pure water production system 3 with the configuration shown in FIG. 2 was prepared. In this testing device, the maximum amount of treated water of the electrodeionization device 56 was set to 23 m³/h, and the amount of treated water of the electrodeionization device 56 was measured when the output of the high pressure pump 52B was manually controlled (manual control) so that the amount of water supply of primary pure water (pure water) W2 varied according to fluctuations in the amount of supply water to the use point of the sub system 4 (amount of water usage at the use point) (Comparative Example 1). The results are shown in FIG. 4 along with the amount of water usage at the use point.

Subsequently, the opening degree of the control valve 60 was adjusted according to fluctuations in the amount of supply water to the use point of the sub system 4 (amount of water usage at the use point), and the amount of treated water of the electrodeionization device 56 was measured when the output of the high pressure pump 52B was controlled by inverter control so that the measurement value of the pressure meter 59 accompanying this adjustment remained substantially constant (Example 1). The results are also shown in FIG. 4 along with the amount of water usage at the use point.

As evident from FIG. 4, according to Example 1 using inverter control, it is possible to vary the amount of treated water of the electrodeionization device 56 (equivalent to the production amount of primary pure water W2) in response to the amount of water usage at the use point, and it can be seen that the operating power of the high pressure pump 52B can be reduced. In contrast, in Comparative Example 1 controlled manually, only simple step control is possible for the amount of water usage at the use point, resulting in excessive amount of treated water of the electrodeionization device 56 and unnecessary power consumption by the high pressure pump 52B.

### Description of Reference Numerals

1 ultrapure water production system
2 pretreatment device
3 primary pure water device (pure water production system)
   31 water-to-be-treated tank
   32 high pressure pump
   33 reverse osmosis membrane device
   34A first degassing membrane device
   34B second degassing membrane device
   35 ultraviolet oxidation device
   36 electrodeionization device
   37 water supply pump
4, 4A, 4B, 4C secondary pure water production device (sub system)
   41 sub-tank
   42 ultraviolet oxidation device
   43 non-regenerative mixed bed ion exchange device
   44 ultrafiltration (UF) membrane
5, 5A, 5B, 5C use point
51 water-to-be-treated tank (water-to-be-treated supply source)
52A water supply pump (water supply mechanism)
52B high pressure pump (water supply mechanism)
53 reverse osmosis membrane device
54A first degassing membrane device
54B second degassing membrane device
55 ultraviolet oxidation device
56 electrodeionization device (CDI)
57 water supply pump
58 boron chelate resin tower
59 pressure meter
60, 60A, 60B, 60C control valve (flow adjustment mechanism)
61A, 61B, 61C flow meter
71 recovery line
72 flow control valve
73 flow meter
74 concentrated water tank
75 water supply pump
76 recovery reverse osmosis membrane device
81 recovery line
82 flow control valve
83 flow meter
W raw water
W1 pretreated water (water to be treated)
W2 primary pure water (pure water)
W3 secondary pure water (ultrapure water)

## Claims

1. A control method for pure water production system that supplies pure water, which is produced by a pure water production system comprising a water-to-be-treated supply source, a water supply mechanism connected to the water-to-be-treated supply source, a pressure meter for water supply provided at a downstream stage of the water supply mechanism, and one or two or more types of water treatment devices provided between the water supply mechanism and the pressure meter, to a pure water using device at a downstream stage of the pressure meter, the control method for pure water production system comprising:
providing a flow adjustment mechanism for pure water supplied to the pure water using device between the pressure meter and the pure water using device, adjusting a supply amount of pure water by the flow adjustment mechanism according to an amount of water usage of the pure water using device, and controlling water supply output of the water supply mechanism so that a measurement value of the pressure meter becomes substantially constant.

2. The control method for pure water production system according to claim 1, wherein the pure water using device is provided in multiple series in parallel at the downstream stage of the pressure meter.

3. The control method for pure water production system according to claim 1 or 2, wherein the water treatment devices are one type or two or more types selected from a reverse osmosis membrane, an ultraviolet oxidation device, a degassing membrane, an electrodeionization device, a regenerative ion exchange device, and a non-regenerative ion exchange device.
